# EUROPEAN PATENT APPLICATION

(11) **EP 3 269 588 A1**
(43) Date of publication of application: **17.01.2018**
(21) Application number: 15884184.1
(22) Date of filing: 12.03.2015
(51) Int. Cl.: B60N 2/66, A47C 7/02, A47C 7/40

(54) **GRADUAL ADJUSTMENT SYSTEM OF LUMBAR SUPPORT OF SEAT**

(71) Applicant: Tangtring Seating Technology Inc., Huizhou, Guangdong 516259 (CN)
(72) Inventor: CHENG, Chien-Chuan, New Taipei 221 (TW)
(74) Representative: dompatent von Kreisler Selting Werner - Partnerschaft von Patent- und Rechtsanwälten mbB
(86) International application number: PCT/CN2015/000166
(87) International publication number: WO 2016/141501

(57) **Abstract**

A gradual adjustment system of a lumbar support of a seat (1) enables a protruding portion on surface (12) of chair back (11) to slide to improve comfort of seat (1). The system comprises an air bag group (2) in chair back (11) corresponding to a waist position of a human body. The air bag group (2) consists of at least three partially overlapping air bags arranged from top to bottom. The air level of each air bag is adjusted by a control module (7) operating an air distributing valve (4). The control module (7) comprises a plurality of adjusting buttons capable of controlling other adjacent air bags to correspondingly exhaust air when a certain air bag is inflated, and is connected to, via a signal, a timing unit (8) capable of recording an air filling time or an air emptying time of each air bag in air bag group (2) controlled by any adjusting button, thus enabling the protruding portion of the lumbar support to slide linearly, and differing from a conventional method of controlling air filling and emptying a single air bag.

## Description

### FIELD OF THE INVENTION

The present invention is related to a gradual adjustment system of lumbar support of seat, particularly related to a gradual adjustment system capable of controlling a protruding portion on a surface of a lumbar support of a chair back of a seat to slide linearly, especially to an air distributing valve, air pump, and control module of the system for controlling air filling and emptying a plurality of air bag groups in turn, which is different from a conventional method of controlling air filling and emptying a single air bag.

### BACKGROUND OF THE INVENTION

For the further enhancement of comfort of a surface of a lumbar support of a chair back of a seat against which a human body leans, mechanical push rods or cam devices are embedded in a sponge cushion body of the chair back in the existing technology. Moreover, dual motors are adopted for biaxial linear control. Thus, it is easy for the protruding point to stop at arbitrary points, so as to adjust the lumbar support gradually with respect to the curvature of the surface of the chair back. The effect and range of the adjustment are quite appropriate for adapting the curvature of the cushion body to the pattern meeting the requirement of human waist. For instance; in the application to the cushion body of the chair back of the automotive seat, the curvature of the surface of the chair back of the automotive seat may be changed as desired, so as to adjust the effect of lumbar support as required by a user.

In the above-mentioned technology of embedding mechanical push rods or cam devices in the cushion body of the chair back, however, the bulky and cumbersome mechanical adjustment mechanism, taking up considerable space, is adverse to the installation in the automotive seat, and further the cause of the problem of uneven pressure on the surface of the cushion body resulting in considerable discomfort to the seated user; In addition, the protruding point is a rigid support, lacking cushion even being enclosed in soft material and not comfortable enough. It is even considerable unsafe due to improper concentrated pressure exerted on the seated user when the collision of automobile happens.

Therefore, the applicant of the present invention had been installed a plurality of air bags inside the cushion body of the chair back, and the technology of adjusting curvature of the surface on the lumbar support of the chair back through filling and emptying the air bags, disclosed in Taiwan patent No. 1327901 and M357915, for example, is the mainstream at present and in the future due to appropriate effect of cushion. In this connection, the structure with a plurality of air bags, accommodated within the supporting frame originally provided inside the cushion body and the chair back, is generally designed, such that each air bag may be emptied via the air distributing valve and inflated by the air pump through the air distributing valve, respectively. In the above-mentioned technology of controlling air filling and emptying each air bag through the air distributing valve, however, it is only possible for adjusting the height of projection on the surface of the chair back , and still hardly achieve the effect of gradual adjustment of lumbar support due to lack of mechanical biaxial linear control structure.

In addition, during the research and development of the present invention, is was also attempted to control each air bag via one button, respectively. However, it is still hardly to achieve the effect of gradual adjustment, due to no difference between this method and a common control system In view of this, a gradual adjustment system of lumbar support of seat is specifically invented by the inventor on the basis of research and practical experience accumulated over many years in the related field, and is capable of controlling air filling one air bag while enabling air emptying adjacent air bags correspondingly, so as to achieve the effect of enabling the protruding portion to slide linearly and then eliminate the above-mentioned drawback of the existing technology.

### SUMMARY OF THE INVENTION

It is the object of the present invention to provide a gradual adjustment system of lumbar support of seat, particularly to a gradual adjustment system, which is cooperated with memory of operating timing, capable of controlling a protruding portion on a surface of lumbar support on a chair back of a seat to slide linearly, so as to overcome the drawback of hardly achieving the function of gradual adjustment through the technology of air filling and emptying air bags in the existing seat, the technology enabling individual control of air filling and emptying a single air bag so as to adjust the height of projection on the surface of chair back of the seat simply due to lack of mechanical biaxial linear control structure. Thereby, comfort of the seat is enhanced.

For achieving the above object, the gradual adjustment system of lumbar support of seat of the present invention is provided with an air bag group provided at a position, corresponding to a waist of a human body, inside chair back, the air bag group consisting of at least three partially overlapping air bags arranged from top to bottom Each air bag is supplied with air received from an air pump via an air distributing valve, such that air level of each air bag is adjusted. The air distributing valve and air pump are operated by a control module, respectively. The control module includes a first adjusting button capable of controlling one of air bags to be inflated, a second adjusting button capable of controlling air emptying and filling, stating from any one of the inflated air bags toward one end of air bag group, in turn, a third adjusting button capable of controlling air emptying and filling, starting from any one of the inflated air bags toward the other end of the air bag group, in turn, a fourth adjusting button capable of controlling air emptying all of air bags, as well as is connected to, via a signal, a timing unit capable of recording an air filling time or an air emptying time of each air bag in air bag group controlled by any one of adjusting buttons, so as to achieve the effect of gradual adjustment of lumbar support.

On account of the above-mentioned structure, when the user is seated on the seat with the back leaning against surface of chair back, the first adjusting button may be operated by the user, so as to control one air bag in the air bag group to be inflated and then expanded through air pump through the air distributing valve, in such a way that surface of chair back is supported by the expanded air bag to protrude, and thus support the waist of the user. Subsequently, the second adjusting button or third adjusting button may be operated by the user, so as to control air emptying the expanded air bag and then air filling another air bag at one end or the other end of the air bag group in turn, such that the air bags in air bag group are emptied and then inflated in turn from the expanded air bag toward the one end or the other end. Thereby, the operation of air emptying one air bag of overlapping adjacent air bags to shrink and then air filling one air bag to expand is formed, so as to enable the protruding portion to slide linearly by supporting and releasing surface of chair back due to air filling and emptying each air bag in turn as mentioned above, whereby the effect of adjusting the support of the air bag group to the waist of the user in a gradual manner, differing from that in a conventional method of controlling air filling and emptying a single air bag, is generated.

It is worth noting that, apart from achieving the object of gradual adjustment of support due to at least three partially overlapping air bags arranged from top to bottom in air bag group adopted in the present invention, the air filling time and the air emptying time of each air bag controlled by air distributing valve in response to operate any one of adjusting buttons, which may be recorded by timing unit. Therefore, the effect of gradual and smooth adjustment of the overall system without abruptness in upward and downward adjustment may be realized through the precise timing control of air filling and emptying each air bag at a point-in-time provided by the timing unit. Not only precise control of supporting effect of air bag group to the waist due to adjusting air filling and emptying the air bags by the user himself/herself, but also gradual adjustment due to the simulation of the function of mechanical lumbar support may be obtained. Moreover, comfort for the leaning user is enhanced further, as well as sitting posture and spinal curvature of the user may be corrected, owing to the air bags of non-rigid material featuring cushion and greater softness. Further, convenience and practicality may be enhanced.

The implementation of each element is further described as follows.

In the implementation, the at least three air bags are arranged from top to bottom in turn inside chair back, and air bag located above is stackingly provided at the bottom thereof over outside of the top of air bag located below.

In the implementation, a cushion body against which a human body leans is provided inside the chair back, the air bag group being located at a position, corresponding to the waist of the human body, on the back of the cushion body.

In the implementation, a backplate used for fixingly supporting the air bags is provided in the rear of the air bag group, the backplate being mounted in front of a supporting frame originally provided inside chair back.

In the implementation, the air distributing valve is provided therein with a main channel capable of receiving air supply from the air pump, and a plurality of branch channels communicated with the main channel, each of the branch channels being respectively connected to an air filling passage communicated with the air bag, and an air emptying passage communicated with the outside. Moreover, each of the branch channels is provided therein with a check valve and an electromagnetic valve rod capable of selecting whether branch channel or air emptying passage is communicated with the air filling passage.

In the implementation, the air filling time and the air emptying time of each air bag controlled by the air distributing valve response to operate any one of adjusting buttons is recorded by the timing unit, such that controlling air filling and emptying each air bag in turn is started at the air filling time and the air emptying time recorded by the timing unit in the next operation of the control module.

In the implementation, the first adjusting button and fourth adjusting button are provided at two sides of the control module. The second adjusting button is provided above the first adjusting button and fourth adjusting button, while the third adjusting button is provided below the first adjusting button and fourth adjusting button.

In the implementation, the control module includes a casing, as well as first adjusting button, second adjusting button, third adjusting button and fourth adjusting button are provided on the exterior of the casing.

In the implementation, control module is built in a touchscreen device, as well as the first adjusting button, second adjusting button, third adjusting button and fourth adjusting button are shown as images on touchscreen device.

In the implementation, the timing unit is provided on circuit board of air distributing valve or air pump, or combined with control module.

In the present invention, in comparison with existing technology, at least three partially overlapping air bags arranged from top to bottom in air bag group are adopted, and various types of timing control performed by the adjusting buttons of control module in cooperation with timing unit are used, and the function of mechanical lumbar support is simulated without abruptness in upward and downward adjustment. Moreover, comfort for the leaning user is enhanced further, as well as sitting posture and spinal curvature of the user may be corrected, owing to air bag of non-rigid material featuring cushion and greater softness. Further, convenience and practical effect may be enhanced.

The embodiments suitable for the present invention, exemplified according to the technical means of the present invention, are described in conjunction with drawings as follows.

### BRIEF DESCRIPTION OF THE DRAWINGS

Fig. 1 is a perspective view of one preferred embodiment of the present invention.
Fig. 2 is a perspective exploded view of the preferred embodiment of the present invention.
Fig. 3 is a cross-sectional view of the preferred embodiment of the present invention.
Fig. 4 is a cross-sectional view of an air distributing valve shown in Fig. 2.
Fig. 5 is a function block diagram of the preferred embodiment of the present invention.
Fig. 6 is a plan view of a control module shown in Fig. 1.
Fig. 7 is a diagram showing the next operation of the air bag group shown in Fig. 3.
Fig. 8 is a diagram showing the next operation of the air bag group shown in Fig. 7.
Fig. 9 is a diagram showing the next operation of the air bag group shown in Fig. 8.
Fig. 10 is a diagram showing the next operation of the air bag group shown in Fig. 9.
Fig. 11 is a diagram showing the operation of air emptying the whole air bag group.

### DETAILED DESCRIPTION OF THE PREFERRED EMBODIMENTS

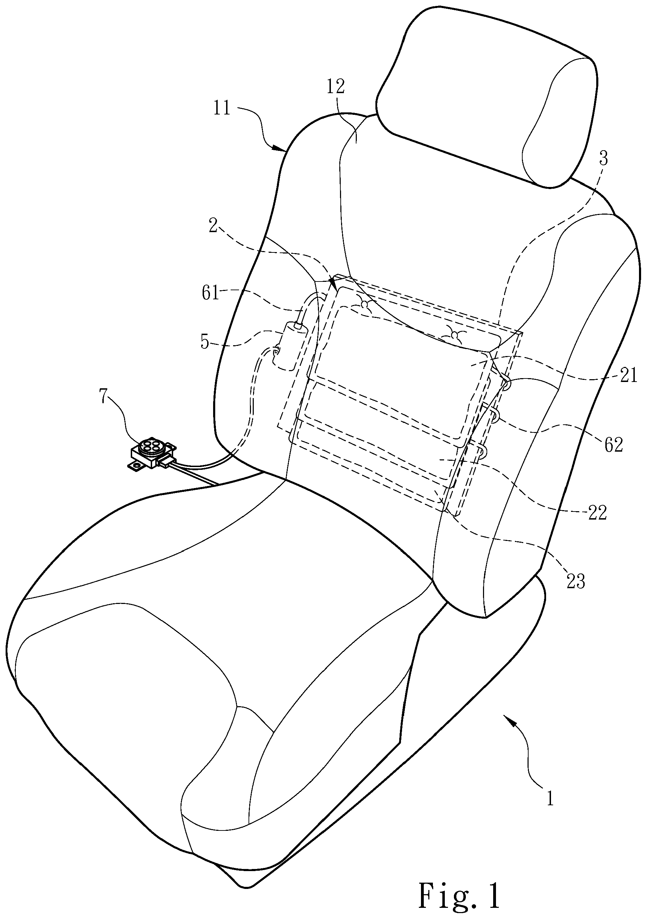

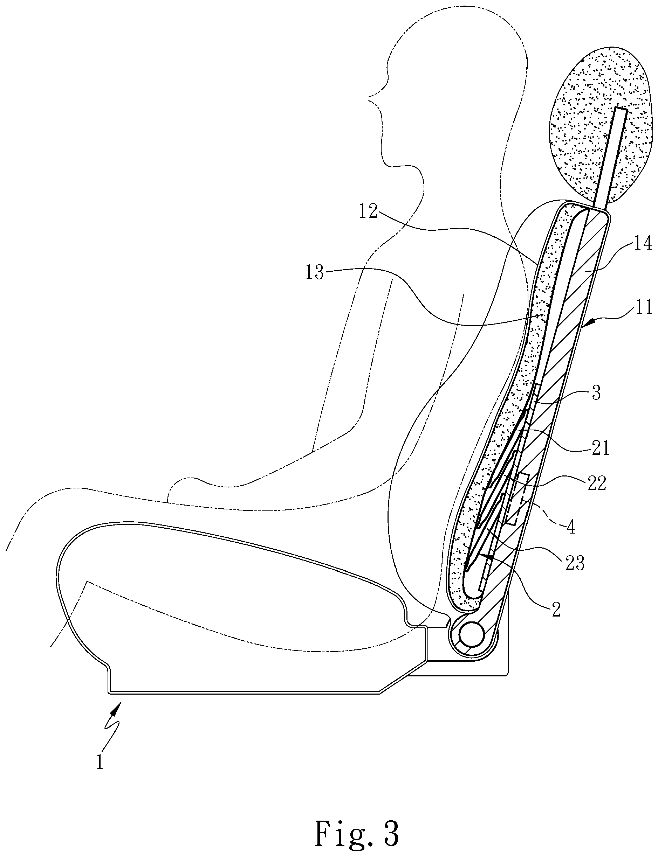

Referring to Figs. 1 to 3, attached figures of one preferred embodiment of the present invention are disclosed. A gradual adjustment system of lumbar support of seat of the present invention, illustrated in the above attached figures, comprises an air bag group 2 provided at a position, corresponding to a waist of a human body, inside chair back 11 of seat 1. The air bag group 2 is composed of at least three partially overlapping air bags arranged from top to bottom In the figures, the seat 1 may be an automotive seat, massage chair or a common chair. Surface 12 of the chair back 11, against which human leans, may be provided. The plurality of air bags are arranged from top to bottom in turn inside chair back 11. Moreover, air bag located above is stackingly provided at the bottom thereof over the outside of top of air bag located below. Air bags illustrated in this embodiment comprise a first air bag 21, a second air bag 22 and a third air bag 23 positioned inside the chair back 11 longitudinally, in such a way that first air bag 21 is located at the top of the air bag group 2, the third air bag 23 is located at the bottom of the air bag group 2, the second air bag 22 is located in the middle of the air bag group 2.

Inside the chair back 11, a buffering sponge or polyurethane foam cushion body 13 against which a human body leans is provided. The cushion body 13 may be erected in front of chair back 11 of seat 1 to be used, such that the air bag group 2 is located at a position, corresponding to the waist of the human body, on the back of the cushion body 13. For the convenience for modular production, a backplate 3 used for fixingly supporting the air bag group 2 is provided in the rear of air bag group 2, so as to facilitate the installation of the air bag group 2 inside chair back 11 of seat 1. Taking the automotive seat 1 as an example, a resilient supporting frame 14 is originally provided inside chair back 11 of the seat 1, with the backplate 3 being fixed in front of supporting frame 14 during installation, whereby the air bag group 2 is positioned and a reverse supporting force is provided for the air bag group 2 being inflated. Subsequently, the back of cushion body 13 is adhered to the front side of the air bag group 2 so as to facilitate installation. Then, the air bag group 2 is located between the cushion body 13 and supporting frame 14.

In addition, the spine of human body is presented in the form of a curve bent forward slightly at the waist position. Thus, the air bag group 2 is provided on the back of cushion body 13 corresponding to the waist position of human body when the present invention is implemented. When the first air bag 21, second air bag 22 and third air bag 23 are inflated, they are projected forward toward surface 12 of chair back 11 with cushion body 13 provided therebetween, and the support is then provided for the waist of the human body.

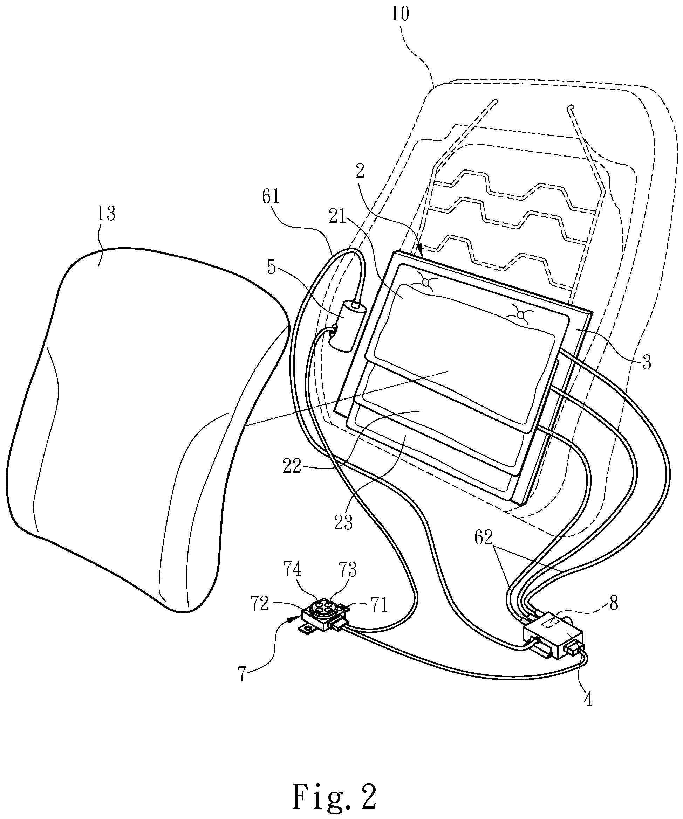

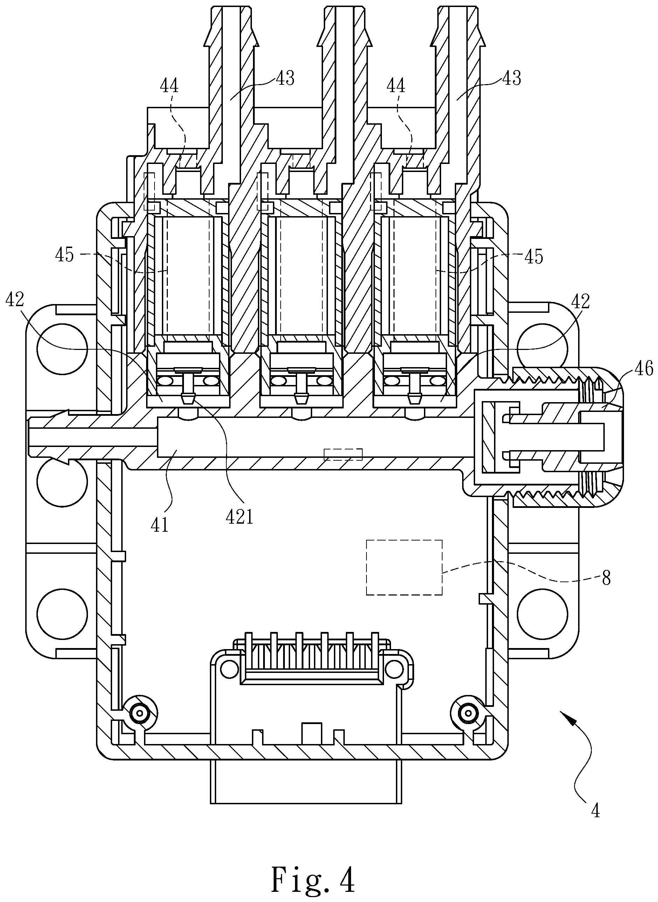

As illustrated in Figs. 2 and 4, the first air bag 21, second air bag 22 and third air bag 23 are supplied with air received from an air pump 5 via an air distributing valve 4, such that air level of each air bag is adjusted. The air distributing valve 4 may be provided on back of the backplate 3 or on supporting frame 14 inside chair back 11. Moreover, air distributing valve 4 is provided therein with a main channel 41 receiving air supply from the air pump 5, and a plurality of branch channels 42 communicated with the main channel 41. For each of branch channels 42, an air filling passage 43 and an air emptying passage 44 are provided, in which the air filling passages are communicated with the first air bag 21, second air bag 22 and third air bag 23, respectively, to inflate, while the air emptying passages are communicated with the outside. Moreover, each of branch channels 42 is provided therein with a check valve 421 and an electromagnetic valve rod 45 driven by electromagnet. The air filling passage 43 may be selectively communicated with branch channel 42 or air emptying passage 44 depending on whether the electromagnetic valve rod 45 is operated. Main channel 41 is further provided thereon with a safety pressure relief valve 46. The safety pressure relief valve 46 may be operated to release pressure for safety when the internal pressure of the main channel 41 is extremely high. The air pump 5 may be provided on the side of backplate 3 or on supporting frame 14 inside chair back 11. Moreover, air pump 5 is engaged with main channel 41 via a tube 61, while each of the first air bag 21, second air bag 22 and third air bag 23 may be engaged with corresponding air filling passage 43, respectively, via a tube 62.

When the first air bag 21 is inflated desirably, the air pump 5 is turned on to operate, such that high-pressure air is allowed to enter branch channel 42 and air filling passage 43 from main channel 41 directly, and air is allowed to flow into and then inflate the first air bag 21. After the first air bag is expanded to a size as required, air pump 5 is stopped and the first air bag 21 is maintained in an expanded state due to non-return provided by check valve 421, such that the effect of support is then provided. When expanded first air bag 21 is emptied desirably, air distributing valve 4 may be allowed for controlling electromagnetic valve rod 45 to block the communication between air filling passage 43 and branch channel 42, and meanwhile, to enable the communication between air filling passage 43 and air emptying passage 44, Thus, air within first air bag 21 is allowed to pass through air filling passage 43 reversely, and then exhausted to the outer atmosphere via air emptying passage 44. The control for air filling and emptying the second air bag 22 and third air bag 23 by the air distributing valve 4 is in the same manner as described above, and then not described further.

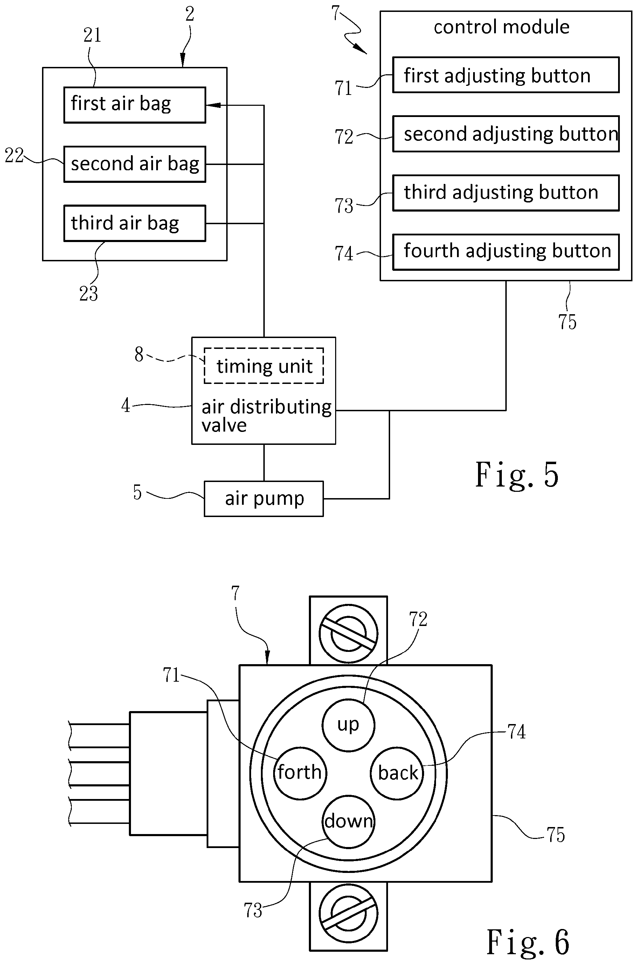

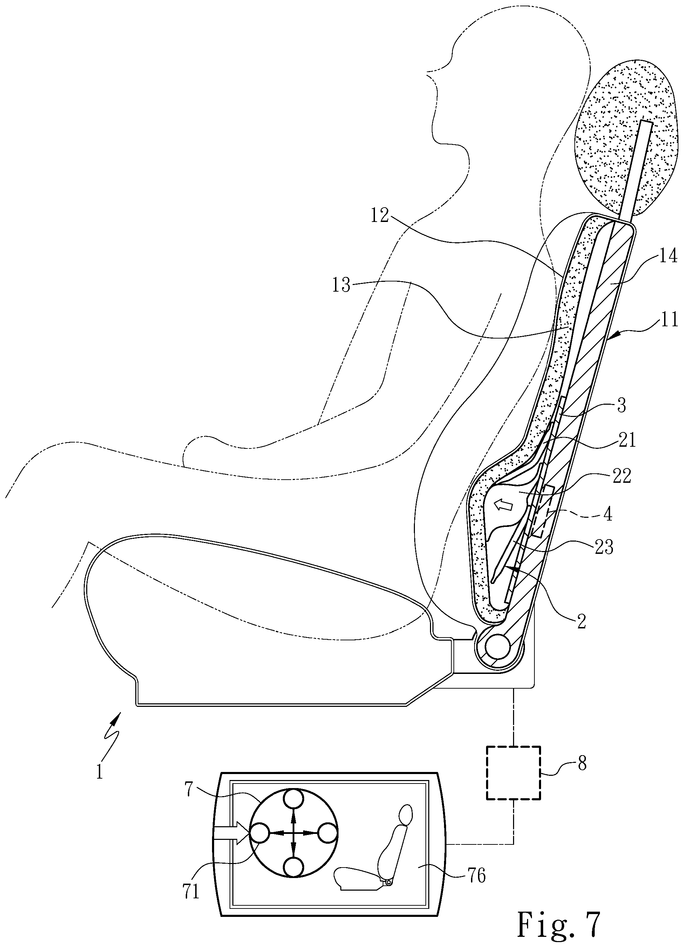

Referring to Figs. 5 and 6, the air distributing valve 4 and air pump 5 are operated by a control module 7, respectively, for air filling the air bags in air bag group 2. The control module 7 includes a first adjusting button 71, a second adjusting button 72, a third adjusting button 73, a fourth adjusting button 74, while is connected to, via a signal, a timing unit 8; In the figures, the control module 7 includes a casing 75, and the adjusting buttons are provided on casing 75 so as to provide an independent operation interface for the convenient operation of a user. Further, timing unit 8 may be provided on the circuit board of air distributing valve 4 or air pump 5 for recording the time when air distributing valve 4 is controlled by any adjusting button for air filling or emptying each air bag in the air bag group 2; Of course, timing unit 8 may be also integrated into casing 75 of control module 7. As illustrated in Fig. 7, the control module 7 is also not exclusive of being integrated into the original operation control system of the seat when it is implemented in practice. Taking the seat 1 of the automobile as an example, the in-vehicle touchscreen device may be operated in more advanced automobile to adjust back and forth, the height, the inclination of chair back, and etc., of the automotive seat 1. Therefore, as illustrated in the figures, control module 7 may be built in a touchscreen device 76, such that first adjusting button 71, second adjusting button 72, third adjusting button 73 and fourth adjusting button 74 are shown as images on touchscreen device 76, so as to achieve the object of controlling and adjusting air bags in air bag group 2.

In addition, multi-touch function of touchscreen device 76 may be also used to operate up and down, left and right in the horizontal X axis and vertical Y axis, when control module 7 is provided on touchscreen device 76. For instance, the operation mode of pressing first adjusting button 71 in Fig. 7 may be also replaced by sliding finger from right to left.

In the practical arrangement of the adjusting buttons, as illustrated in Fig. 6, the first adjusting button 71 and fourth adjusting button 74 may be provided at two sides of the control module 7. The second adjusting button 72 may be provided above the first adjusting button 71 and fourth adjusting button 74, while the third adjusting button 73 may be provided below the first adjusting button 71 and fourth adjusting button 74, in such a way that the first adjusting button 71, second adjusting button 72, third adjusting button 73 and fourth adjusting button 74 are arranged in a pattern of direction adjustment in upward, downward, leftward and rightward directions, and are operated by the user intuitively in conjunction with controlling air filling or emptying air bags in turn by the adjusting buttons. Similarly, the first adjusting button 71 through four adjusting button 74 accomplished in horizontal X axis and vertical Y axis may be also replaced by a physical lever operable both in horizontal X axis and vertical Y axis.

When the user is seated on the pad of seat 1 with the back leaning against surface 12 of chair back 11, no action is perceived because each air bag is not presented in the expanded state if second adjusting button 72, third adjusting button 73 or fourth adjusting button 74 are firstly pressed by the user. As illustrated in Fig. 7, the present invention is configured such that it is necessary to press first adjusting button 71 for controlling second air bag 22 in the air bag group 2 to be inflated and then expanded through the air distributing valve 4. Thereby, the surface 12 of chair back 11 is supported to protrude by expanded second air bag 22 through cushion body 13, so as to support the waist of the user. Meanwhile, the time when inflation is stopped may be recorded by the timing unit 8, whereby the time when subsequent air filling the air bags is started is determined. When second air bag 22 is inflated to expand to a full pressure state, inflation is stopped automatically by the control module 7 if first adjusting button 71 is pressed by the user continuously; Of course, control module 7 may be also preloaded with setting time, and inflation will be stopped when the air filling time recorded by timing unit 8 reaches the setting time.

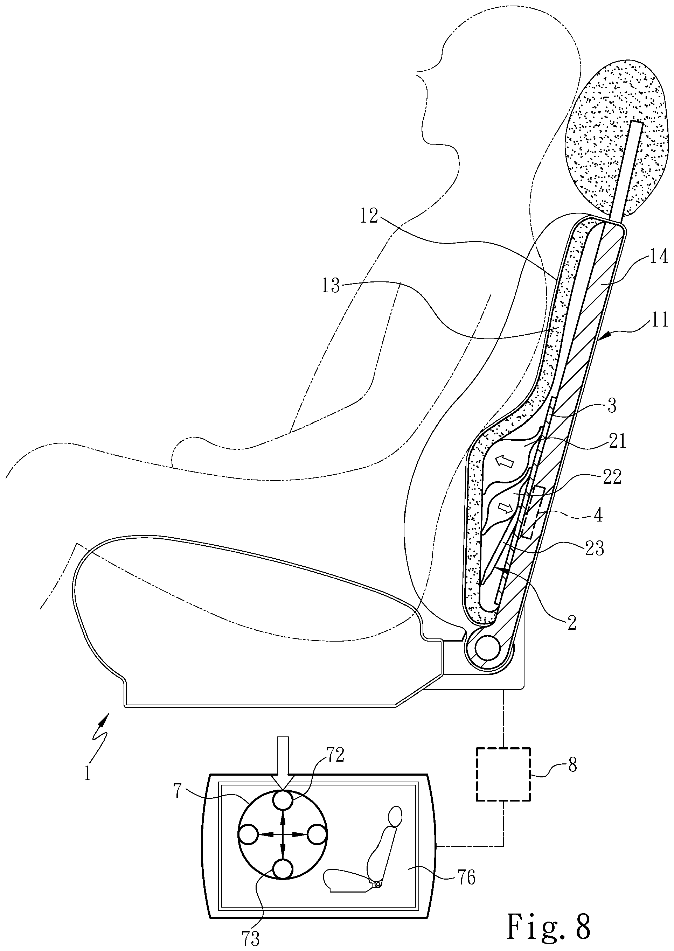

As illustrated in Fig. 8, when second adjusting button 72 is pressed by the user, second air bag 22 is emptied to shrink, while first air bag 21 is inflated to expand, such that surface 12 of chair back 11 is supported to protrude by expanded first air bag 21 through cushion body 13. Then, the protruding portion on the surface of cushion body 13 is formed in the position of second air bag 22 and shifted upward to the position of first air bag 21 gradually, until first air bag 21 is expanded to the full state, or pressing by the user is stopped or air filling time recorded by timing unit 8 reaches the setting time.

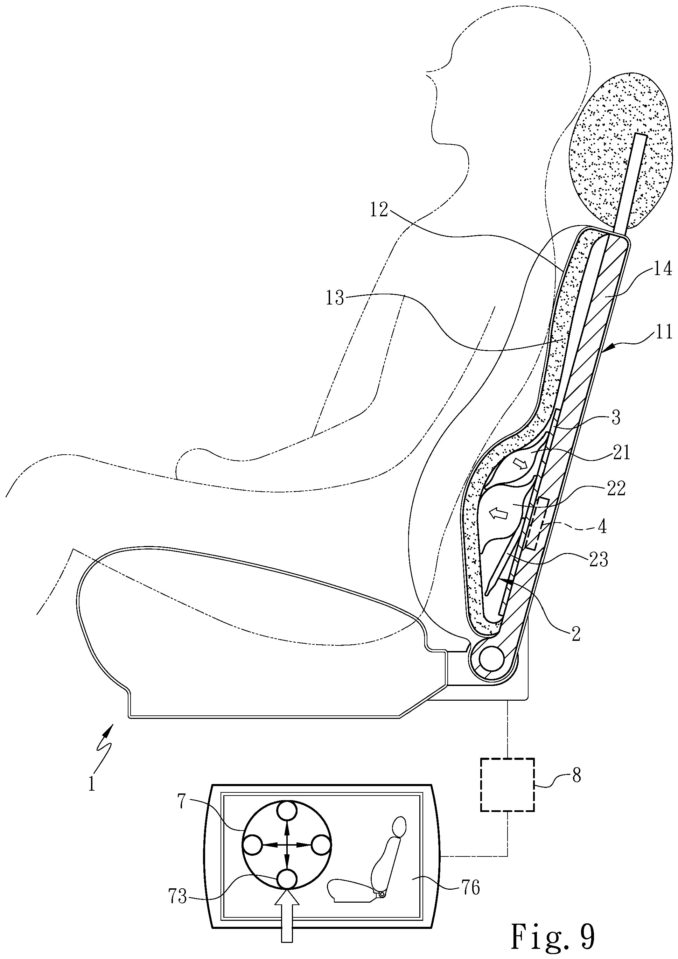

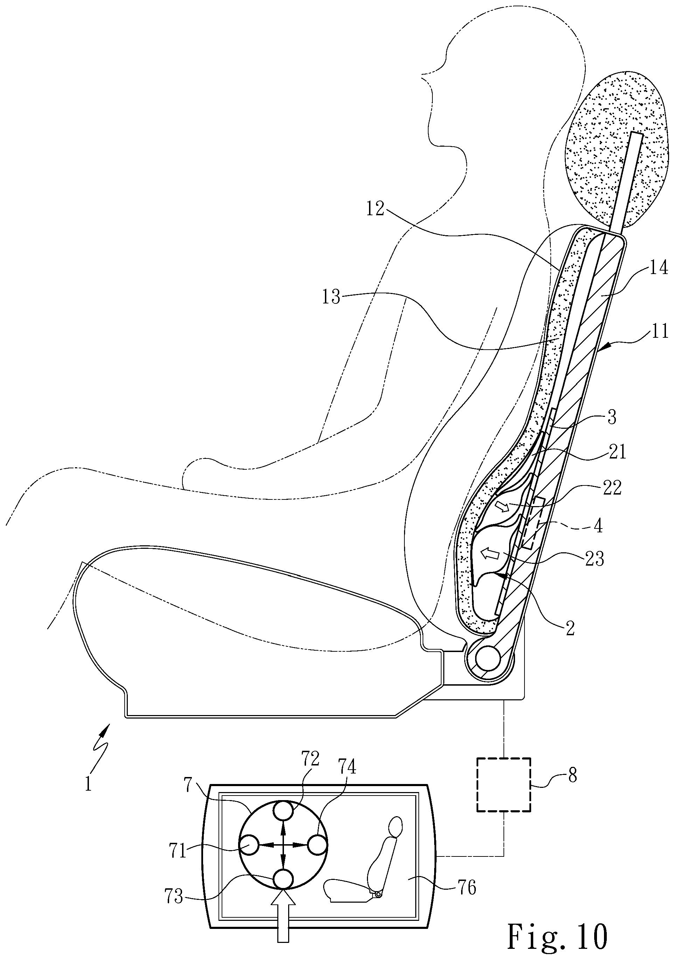

On the contrary, if third adjusting button 73 is pressed as illustrated in Figs. 9 and 10, second air bag 22 is emptied to shrink, and third air bag 23 is inflated to expand (as illustrated in Fig. 10); until third air bag 23 is expanded to the full state, or pressing by the user is stopped or air filling time recorded by timing unit 8 reaches the setting time.

In the process illustrated in Fig. 8, the protruding portion on the surface of cushion body 13 is shifted upward from the position of second air bag 22 to that of first air bag 21 when second adjusting button 72 is pressed by the user. Meanwhile, third adjusting button 73 is pressed, as illustrated in Fig. 9, first air bag 21 is emptied to shrink while second air bag 22 is inflated to expand until second air bag 22 is expanded to the full pressure state. If third adjusting button 73 is pressed continuously, as illustrated in Fig. 10, second air bag 22 is emptied to shrink and third air bag 23 is inflated to expand, such that surface 12 of chair back 11 is supported to protrude by expanded third air bag 23 through cushion body 13, so as to support the waist of the user, until third air bag 23 is expanded to the full pressure state. If third adjusting button 73 is pressed continuously further, no action is operated. Meanwhile, if second adjusting button 72 is pressed again, the operation of emptying and filling the air bag group 2 is generated in turn in accordance with the sequence of third air bag 23, second air bag 22 and first air bag 21. The aforementioned adjustment of each air bag is only the example taken in the continuous pressing state. In the example of continuously pressing state, only if the degree of comfort provided by the air bags is reached for the user in the process of adjustment, this process may be stopped at any time only if the adjusting button is released, and the current state is recorded by the timing unit 8. Thus, in the next operation of control module 7, controlling air filling and emptying each air bag in turn is started at the air filling time and the air emptying time recorded by the timing unit 8.

In the present invention, it is known from the above description that any air bag in the air bag group 2 is controlled to start air emptying and filling one end or the other end thereof gradually through the control module 7, air distributing valve 4 and timing unit 8, such that adjacent air bag is emptied to shrink and the other is inflated to expand. Thus, surface 12 of chair back 11 is supported and released by first air bag 21, second air bag 22 and third air bag 23 filled and emptied in turn through cushion body 13, such that the protruding portion is allowed to slide linearly, so as to adjust the support to the waist of the user gradually. In addition, the adjustment of the protruding portion on surface 12 of chair back 11, in the manner of upward and downward motion, through the air bag group 2 is extremely smooth without relative abruptness. Thereby, the gradual adjustment of the lumbar support is realized, and the arc of the support is allowed to meet the ergonomic requirement to enable the structure of chair back 11 to correct the sitting posture and spinal curvature of the user.

Furthermore, when any air bag (such as the third air bag 23) in the air bag group 2 is inflated or emptied by the user via any adjusting button, the pressed adjusting button may be recorded by timing unit 8, once the adjusting button is released, to be the starting point for the next operation. For instance, if filling third air bag 23 is just started while air emptying second air bag 22 is just started in the previous adjustment, air filling third air bag 23 may be sustained when the first adjusting button 71 is pressed, while third air bag 23 is used as the starting point for air filling and emptying when second adjusting button 72 or third adjusting button 73 is pressed. First air bag 21, second air bag 22 and third air bag 23 are emptied simultaneously if fourth adjusting button 74 is pressed. In this way, controlling air filling and emptying at least three air bags in turn may be achieved through first adjusting button 71, second adjusting button 72, third adjusting button 73 and fourth adjusting button 74. Moreover, the timing unit 8 is used to record the air filling time and the air emptying time, so as to control three or more air bags precisely without mixing up sequence.

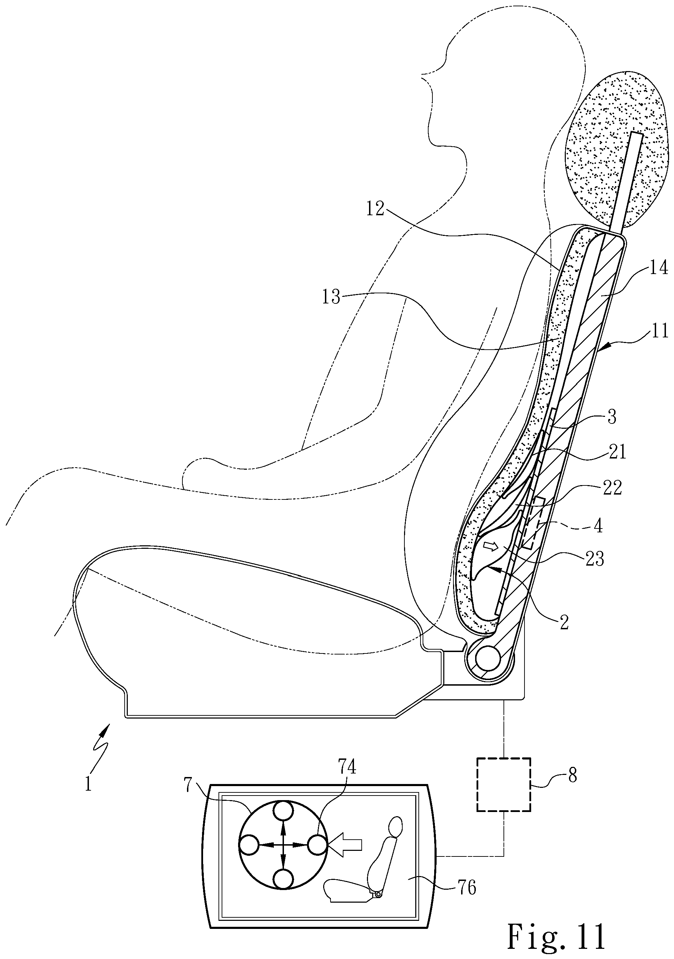

In particular, it is worth noting that, in Fig. 7 to 11, the timing unit 8 is capable of recording the air filling time and the air emptying time of each air bag (21-23) in air bag group 2 controlled by any one of the adjusting buttons (71-74), in such a way that controlling air filling and emptying the air bags in turn in the next operation of control module 7 is started at the air filling time and the air emptying time recorded by the timing unit 8. Further, gradual adjustment with memory and timing control is achieved, as well as the function of one-button recovery is realized.

Thereby, differing from a conventional method of controlling air filling and emptying a single air bag, the arrangement of the plurality of partially overlapping air bags is adopted in the present invention in conjunction with individual air filling and emptying time of the air distributing valve 4 for each air bag. Moreover, various types of timing control are performed by control module 7 and timing unit 8. Therefore, smooth adjustment of the overall system is realized without abruptness in upward and downward adjustment. The support of the air bag group 2 to the waist and back is controlled precisely by the user himself/herself via gradually adjusting air filling and emptying the air bags, so as to realize gradual adjustment of the support provided by the back lumbar support and then simulate the function of mechanical lumbar support. In addition, air bag group 2 is made of non-rigid material featuring cushion and greater softness, so as to enhance comfort to the leaning user, as well as to be used for correcting sitting posture and spinal curvature and further for enhancing convenience and practical effect.

## Claims

1. A gradual adjustment system of lumbar support of seat, **characterized by** comprising an air bag group (2) provided at a position, corresponding to a waist of a human body, inside chair back (11), said air bag group (2) consisting of at least three partially overlapping air bags (21, 22, 23) arranged from top to bottom, each air bag (21, 22, 23) being supplied with air received from air pump (5) via an air distributing valve (4), such that air level of each air bag (21, 22, 23) is adjusted, said air distributing valve (4) and said air pump (5) being operated by a control module (7), respectively, said control module (7) including a first adjusting button (71) capable of controlling one of air bags (21, 22, 23) to be inflated, a second adjusting button (72) capable of controlling air emptying and filling, stating from any one of inflate air bags (21, 22, 23) toward one end of air bag group (2), in turn, a third adjusting button (73) capable of controlling air emptying and filling, starting from any one of said inflated air bags (21, 22, 23) toward the other end of said air bag group (2), in turn, a fourth adjusting button (74) capable of controlling air emptying all of air bags (21, 22, 23), as well as being connected to, via a signal, a timing unit (8) capable of recording an air filling time or an air emptying time of each air bag (21, 22, 23) in said air bag group (2) controlled by one of adjusting buttons.

2. The gradual adjustment system of lumbar support of seat according to claim 1, **characterized in that** said at least three air bags are arranged from top to bottom in turn inside chair back (11), and one of said air bags (21, 22, 23) located above is stackingly provided at the bottom thereof over the outside of the top of air bag (21, 22, 23) located below.

3. The gradual adjustment system of lumbar support of seat according to claim 1, **characterized in that** a cushion body (13) against which a human body leans is provided inside said chair back (11), said air bag group (2) being located at a position, corresponding to the waist of the human body, on the back of said cushion body (13).

4. The gradual adjustment system of lumbar support of seat according to claim 1, **characterized in that** a backplate (3) used for fixingly supporting said air bags (21, 22, 23) is provided in the rear of said air bag group (2), backplate (3) being mounted in front of a supporting frame (14) originally provided inside said chair back (11).

5. The gradual adjustment system of lumbar support of seat according to claim 1, **characterized in that** said air distributing valve (4) is provided therein with a main channel (41) used for receiving air supply from said air pump (5), and a plurality of branch channels (42) communicated with said main channel (41), each of the plurality of branch channels (42) being respectively provided with an air filling passage (43) communicated with one of said air bags (21, 22, 23), and an air emptying passage (44) communicated with the outside, each of said branch channels (42) being provided therein with a check valve (421) and an electromagnetic valve rod (45) capable of selecting whether branch channel (42) or air emptying passage (44) is communicated with said air filling passage (43).

6. The gradual adjustment system of lumbar support of seat according to claim 1, **characterized in that** said first adjusting button (71) and fourth adjusting button (74) are provided at two sides of said control module (7), said second adjusting button (72) is provided above said first adjusting button (71) and fourth adjusting button (74), while said third adjusting button (73) is provided below said first adjusting button (71) and fourth adjusting button (74).

7. The gradual adjustment system of lumbar support of seat according to claim 1, **characterized in that** said control module (7) includes a casing (75), as well as first adjusting button (71), second adjusting button (72), third adjusting button (73) and fourth adjusting button (74) are provided on the exterior of said casing (75).

8. The gradual adjustment system of lumbar support of seat according to claim 1, **characterized in that** said control module (7) is built in a touchscreen device (76), as well as said first adjusting button (71), second adjusting button (72), third adjusting button (73) and fourth adjusting button (74) are shown as images on touchscreen device (76).

9. The gradual adjustment system of lumbar support of seat according to claim 1, **characterized in that** the air filling time and the air emptying time of each air bag (21, 22, 23) controlled by said air distributing valve (4) in response to operate to one of adjusting button is recorded by said timing unit (8), such that controlling air filling and emptying each air bag (21, 22, 23) in turn is started at the air filling time and the air emptying time recorded by said timing unit (8) in the next operation of control module (7).

10. The gradual adjustment system of lumbar support of seat according to claim 9, **characterized in that** said timing unit (8) is provided on a circuit board of air distributing valve (4) or air pump (5), or combined with control module (7).
